# EUROPEAN PATENT APPLICATION

(11) **EP 4 664 375 A1**
(43) Date of publication of application: **17.12.2025**
(21) Application number: 24181734.5
(22) Date of filing: 12.06.2024
(51) Int. Cl.: G06Q 20/08, G06Q 20/18, G06Q 20/40, G07F 7/06

(54) **METHODS AND SYSTEMS FOR SUPPORTING RETURNING OF PRODUCTS AND/OR CONTAINERS AFTER USE**

(71) Applicant: Tomra Systems ASA, 1385 Asker (NO)
(72) Inventor: Vaelitalo, Stian Salmela, 3470 Slemmestad (NO); Storhaug, Henning, 0861 Oslo (NO); Saether, Geir, 1386 Asker (NO)
(74) Representative: AWA Sweden AB

(57) **Abstract**

A first system and a method in the first system are provided. A token associated with payment card data is received from a second system relating to a payment service provider. The payment card data identify a payment card used for a purchase of a product and are non-derivable from the token without access to an association of the token to the payment card data. A unique identifier of the product is identified by means of electronically or optically scanning the product in connection with the purchase of the product, and an association of the identifier to the token is stored. On condition that a) an indication that the identifier of the product has been identified by means of electronically or optically scanning the product using a second electronic or optical scanning device in connection with the product having been returned at a return point is received or b) no indication that the identifier of the product has been identified at any return point is received within a predetermined time from the time of the purchase the token is identified by means of the association of the identifier to the token as stored, and the token is sent to the second system to enable debiting or crediting the payment card used for the purchase of the product.

## Description

### Technical Field

The present disclosure generally relates reuse of products and/or containers, and specifically to methods and systems for supporting returning of products and/or containers after use.

### Background

Methods and systems for receiving and identifying containers for recycling, such as used beverage or food containers, are known. These devices typically receive the containers one by one and identifies a type of container e.g. by scanning the container to read a barcode identifying the type of the container. In order to promote returning of empty containers, a remuneration may be provided, e.g. in the form of refund of a deposit, when the container is returned. Such a remuneration may for example be handled by means of issuing of a physical token such as a receipt which can be scanned at a payment terminal together with a payment card in order for the reward to be credited to the payment card.

In addition to recyclable containers there are also reusable containers. For such reusable containers the same issues as for recyclable containers remain but also further issues arise in relation to the principles of handling returning of the containers. For example, such reusable containers may be provided at events e.g. in the form of reusable glasses, plates or the like which should be returned at the event which may result in time consuming ques at return points where the containers are returned, and a remuneration is awarded for each container. Similar cues may arise at other facilities such as restaurants. Additionally, the containers may not necessarily be returned at the same place they were purchased leading to high complexity in the system for handling return and remuneration.

An example of a method for handling recyclable and/or reusable containers is provided in US2022/0207551 A1.

There is still a need for enhanced methods and systems for supporting returning containers or products after use.

### Summary

In view of the above, it is an object of the present inventive concept to mitigate, alleviate or eliminate problems in the art.

The invention is defined by the appended independent claims, with embodiments being set forth in the appended dependent claims, in the following description and in the drawings.

According to a first aspect, a method in a first system is provided. A token associated with payment card data is received from a second system relating to a payment service provider. The payment card data identify a payment card used for a purchase of a product. Furthermore, the payment card data are non-derivable from the token without access to an association of the token to the payment card data. An identifier of the product is identified by means of electronically or optically scanning the product using a first electronic or optical scanning device in connection with the purchase of the product. The identifier is unique in the first system. An association of the identifier to the token is then stored. On condition that a) an indication that the identifier of the product has been identified by means of electronically or optically scanning the product using a second electronic or optical scanning device in connection with the product having been returned at a return point is received or b) no indication that the identifier of the product has been identified at any return point is received within a predetermined time from the time of the purchase, the token is identified by means of the association of the identifier to the token as stored, the token is sent to the second system to enable debiting or crediting the payment card used for the purchase of the product.

By token is meant any type of data that is unique to the payment card data but from which alone it is not possible to derive the payment card data without having access to an association of the token to the payment card data. Such an association is typically only stored in the second system relating to the payment service provider. A token is also typically anonymous such that a card holder of the payment card associated with the token cannot be identified from the token.

By payment service provider is meant a provider of a system for payment based on payment cards.

By payment card is meant a payment means which can be used for payment either using a credit or it may be connected to an account which is debited at payment.

By payment card data is meant any data that uniquely identifies a payment card.

By means of identifying the identifier of the product and associating it to the payment card via the token, the payment card may be debited or credited at a time after the purchase, e.g. when the product is returned, without a need for any action by the person using the payment card for the purchase, e.g. without the need for scanning the payment card again at returning the product. This is advantageous for example when many products are to be returned within a short time since it allows for returning of the products without the need for any further action, e.g. scanning of a credit card, performed by the persons returning the products whilst still allowing for debiting or crediting the payment cards used for purchasing the products. The time it takes for returning the products can hence be shortened.

By means of receiving a token associated with the payment card data but wherein the payment card data are non-derivable from the token without access to an association of the token to the payment card data, an association may be stored from the identifier of the product to the payment card data in the form of the stored association from the identifier of the product to the token. Then, if an indication is received that the identifier of the product has been identified by means of electronically or optically scanning the product using a second electronic or optical scanning device in connection with the container having been returned at a return point, the identifier of the product can be used to identify the token via the stored association. The token can then be sent to the second system to enable crediting or debiting the payment card used for the purchase of the product. Similarly, if no indication that the identifier of the product has been identified at any return point is received within a predetermined time from the time of the purchase, the identifier of the product can be used to identify the token via the stored association and the token can be sent to the second system to enable crediting or debiting the payment card used for the purchase of the product. Hence, the payment card data need not be stored in the first system. This is beneficial since storing of such payment card data will lead to a higher complexity of the first system since such storing has strict security requirements. Hence, with receipt of the token and storing the association, debiting or crediting the payment card without the need for any action performed by a holder the payment card, without increasing the complexity of the first system due to strict security requirements.

By identifying the identifier of the product by means of electronically or optically scanning the product using a first electronic or optical scanning device in connection with the purchase of the product, the identifier of the product can be automatically identified in the system and associated with the received token. This enables a fast and simple way of retrieving the identifier of the product and associating it with the token associated with the payment card data.

In embodiments, the first system is a system for handling containers wherein the product comprises a container and the identifier is of the container. The condition may then be that an indication is received that the identifier of the container has been identified by means of electronically or optically scanning the container using a second electronic or optical reader device in connection with the container having been returned at a return point. The token is then sent to the second system to enable crediting the payment card used for the purchase of the product. In alternative, the condition may be that no indication that the identifier of the container has been identified at any return point is received within a predetermined time from a time of the purchase of the product. The token is then sent to the second system to enable debiting the payment card used for the purchase of the product.

In other embodiments, the first system is a system for handling time limited use of a product wherein the purchase is of use of the product during a predetermined time from a time of the purchase. The condition may then be that no indication that the identifier of the product has been identified at any return point is received within the predetermined time from the time of the purchase. The token is then sent to the second system to enable debiting the payment card used for the purchase.

In embodiments, the first system is a system for handling use of a product a selectable time wherein the purchase is of use of the product during a selectable time from a time of the purchase. The condition may then be that an indication that the identifier of the product has been identified by means of electronically or optically scanning the product using a second electronic or optical scanning device in connection with the product having been returned at a return point is received. The method may then further comprise determining a time of use of the product being a time from the time of the purchase to a time when the indication that the identifier of the product has been identified is received. The token is then sent to the second system to enable debiting the payment card used for the purchase, wherein an amount being debited is based on the time of use of the product.

In embodiments, the method further comprises identifying, by means of electronically or optically scanning a payment instrument using a third electronic or optical scanning device, the payment card data identifying the payment card associated with the payment instrument used for a purchase of a product, and sending the payment card data to the second system.

In embodiments, the method further comprises on condition that i) an indication that new payment card data identifying a new payment card is identified by means of electronically or optically scanning a payment instrument using a fourth electronic or optical scanning device at a return point before the product having been returned at a return point is received, and ii) an indication that the identifier of the product has been identified by means of electronically or optically scanning the product using a second electronic or optical scanning device in connection with the product container having been returned at a return point is received: bypassing the sending of the token to the second system to enable debiting or crediting the payment card used for the purchase of the product; and sending the new payment card data to the second system to enable debiting or crediting the new payment card identified by the new payment card data.

According to a second aspect, a first system is provided. The system comprises a first transmitter, a receiver, a first electronic or optical scanning device, a memory, and circuitry. The receiver is configured to receive a token associated with the payment card data from a second system relating to a payment service provider, wherein the payment card data identify a payment card used for a purchase of a product, wherein the payment card data are non-derivable from the token without access to an association of the token to the payment card data. The first electronic or optical scanning device configured to, in connection with the purchase of the product, electronically or optically scan the product to identify an identifier of the product, wherein the identifier is unique in the first system. The memory is configured to store an association of the identifier to the token. The first transmitter is configured to send the token to the second system. The circuitry is configured to, on condition that a) an indication that the identifier of the product has been identified by means of electronically or optically scanning the product using a second electronic or optical scanning device in connection with the product having been returned at a return point is received or b) no indication that the identifier of the product has been identified at any return point is received within a predetermined time from the time of the purchase execute an identifying function and a first sending function. The identifying function is configured to identify the token by means of the association of the identifier to the token as stored in the memory. The first sending function is configured to send the token via the first transmitter to the second system to enable debiting or crediting the payment card used for the purchase of the product.

The above-mentioned optional additional features of the method according to the first aspect, when applicable, apply to the first system according to the second aspect as well. In order to avoid repetition, reference is made to the above.

It is to be understood that this invention is not limited to the particular component parts of the systems described or acts of the methods described as such system and method may vary. It is also to be understood that the terminology used herein is for purpose of describing particular embodiments only and is not intended to be limiting.

### Description of the Drawings

Fig. 1 shows a flowchart in relation to embodiments of a method according to the present disclosure.
Fig. 2 shows a diagram in relation to embodiments of a first system and a method according to the present disclosure.
Fig. 3 shows a flowchart in relation to further embodiments of a method according to the present disclosure.
Fig. 4 shows a diagram in relation to embodiments of a first system according to the present disclosure.

### Detailed Description

The above and other aspects of the present invention will now be described in more detail, with reference to appended figures. The figures should not be considered limiting but are instead used for explaining and understanding.

The invention is for example applicable in different scenarios where a product is purchased using a payment card in a first system and a second system related to a payment service provider should be provided with an identification of the payment card to enable debiting or crediting of the payment card if a) the product is returned or b) the product is not returned within a predetermined period of time without the need for electronically or optically scanning a payment instrument to which the payment card is associated.

One example of such a scenario is when a product such as food or beverage is purchased in a reusable container such as a cup or on a plate and the payment card used for the purchase is either credited if the reusable container is registered to have been returned or debited if the reusable container is not registered to have been returned within a predetermined period of time from the time of purchase. Such a scenario may for example be implemented at a venue during an event. At such event the number of reusable containers may be substantial, and they need to be returned within a limited period of time during the event. Hence, there is a high risk of congestion at return points unless the returning and associated remuneration can be handled fast and with as few actions as possible required to be performed by the persons returning the containers.

When referring to product herein it may be a product that is not related to a container, or it may be a product that is contained in a container. Furthermore, for references to product in relation to the returning of a product or actions in relation to this, this is equally applicable to returning of a container. However, reference is sometime only made to product in order to avoid repletion every time of product or container.

Furthermore, when reference is made to reusable containers herein, this is equally applicable to recyclable containers. However, since there will typically be a larger number of recyclable containers than reusable containers to be handled in a respective system for handling returning containers, having a unique identifier for each recyclable container may be of less interest than for reusable containers. Furthermore, the desire to promote fast returning of reusable containers may be higher than for recyclable container in order to enable keeping down the number of reusable containers needed. Additionally, the cost for reusable containers may be so high that a deposit corresponding to the actual cost of the container is not feasible. Hence, a lower deposit may be charged at purchase and refunded at return. This may be combined with a debiting of a further amount after a predetermined time from purchase, such that the combination of the further amount and the deposit corresponds to the total cost of the reusable container.

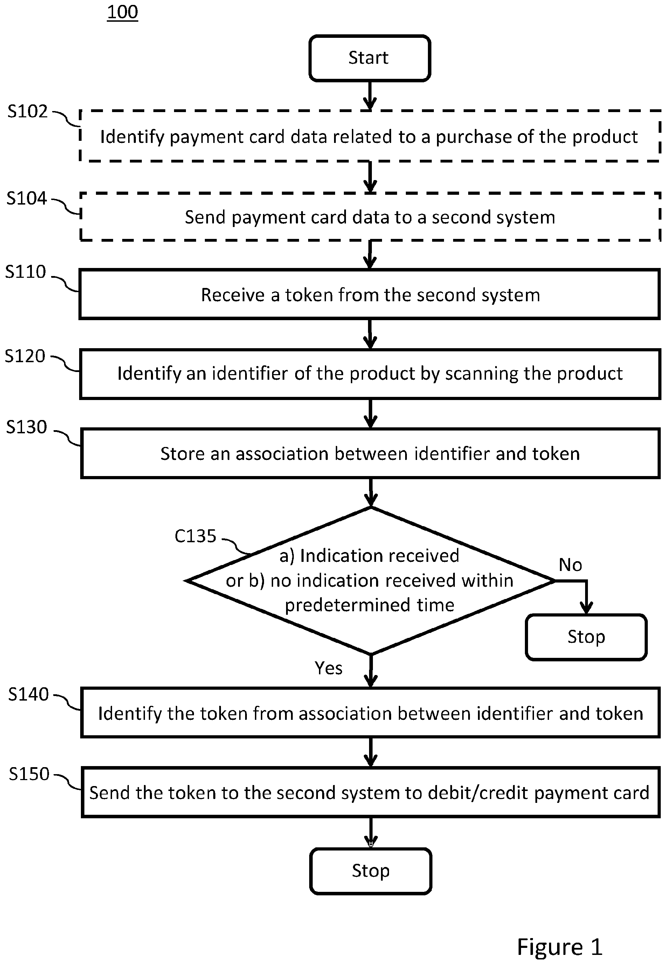

Embodiments of a method 100 in a first system will now be described in relation to the flow chart in Figure 1. In the method 100, a token associated with payment card data is received S110 from a second system relating to a payment service provider. The payment card data identify a payment card used for a purchase of a product. The payment card data are non-derivable from the token without access to an association of the token to the payment card data.

Payment card data may for example be the name of the holder, a 16 digit PAN number, expiry date, and CVC code. Storing of such data is restricted and requires authorisation. The security requirements to retrieve such authorization are high and will require a highly complex system. Hence, it is desired to avoid storing of such data.

In exemplary embodiments, the purchase of the product is performed by means of a payment instrument. The payment instrument is a way of representing the payment card and may for example be a smartphone, a smartwatch, the payment card itself, etc or any other means that may be used to represent the payment card in a secure way. During the purchase of the product, the payment card data are identified S102 in the first system, e.g. in a payment terminal at point of sale, by means of electronically or optically scanning the payment instrument using a third electronic or optical scanning device. The payment card data are then sent S104 from the first system to the second system. The token may for example be generated in the second system by means of hashing the payment card data. After the token has been generated, an association between the token and the payment card data may be stored in the second system.

The technical means of the third electronic or optical scanning device used for scanning the payment instrument to identify the payment card data depends on the type of payment instrument. If the payment instrument is a smartphone or a smartwatch, the scanning may for example use near field communication or other type of wireless technology. If the payment instrument is the payment card itself, the scanning may use magnetic sensors, electronic reader of an electronic chip, radio-frequency scanning of a radio-frequency identifier (RFID). The use of "electronically or optically scanning" is intended to cover all of these scanning methods and any other present or future scanning methods enabling machine implemented scanning of a payment instrument to identify payment card data.

In connection with the purchase of the product, an identifier of the product is identified S120 by means of electronically or optically scanning the product using a first electronic or optical scanning device. The identifier is unique in the first system.

There are different ways of implementing unique identifiers in the first system. Either the identifier for each product specimen consists of a unique identifier marking only such that there are no two product specimens that have the same identifier marking regardless of the type of product of the product specimens. In such a case, when the identifier is identified by scanning the product, the product needs to be scanned only in terms of identifying the identifier marking. In alternative, to reduce the number of different identifier markings required, an identifier marking of each product specimen may be unique only to the specific type of product that product specimen belongs to, such that the identifier consists of the identifier marking and the type of product. In such a case, when the identifier is identified by scanning the product, the product needs to be scanned both in terms of identifying the identifier marking and the type of product.

The technical means of the first electronic or optical scanning device for scanning the product to identify the identifier of the product depends on the way that the identifier of the product is implemented. If the identifier of the product is implemented by means of a barcode, QR code or other visual marking on the product, the scanning uses optical technology. If the identifier of the product is implemented by means of a radio-frequency identifier (RFID) chip, the scanning uses RFID technology. The use of "electronically or optically scanning" is intended to cover all of these scanning methods and any other present or future scanning methods enabling machine implemented scanning of a product to identify an identifier of the product.

Once the identifier has been identified S120, an association of the identifier to the token is stored S130 in a memory in the first system. The association is any type of link between the token and the identifier such that the token can be retrieved from the memory based on the identifier.

In the method 100, at least one of two criteria is then checked. In a first criterion a) it is checked whether an indication that the identifier of the product has been identified by means of electronically or optically scanning the product using a second electronic or optical scanning device in connection with the container having been returned at a return point is received. In a second criterion b) it is checked if no indication that the identifier of the product has been identified at any return point is received within a predetermined time from the time of the purchase.

The technical means of the second electronic or optical scanning device for scanning the product to identify the identifier of the product may be implemented according to the same options as described hereinabove for the first electronic or optical scanning device.

In first embodiments, only the first criterion a) is checked, in second embodiments only the second criterion b) is checked and in third embodiments both the first criterion a) and the second criterion b) are checked.

On condition that at least one of the criterion a) and criterion b) is fulfilled, the token is identified S140 by means of the association of the identifier to the token as stored in the memory in the first system, and token is then sent S150 to the second system to enable debiting or crediting the payment card used for the purchase of the product.

Debiting or crediting is made in a currency, typically the local currency of the location where the product was purchased.

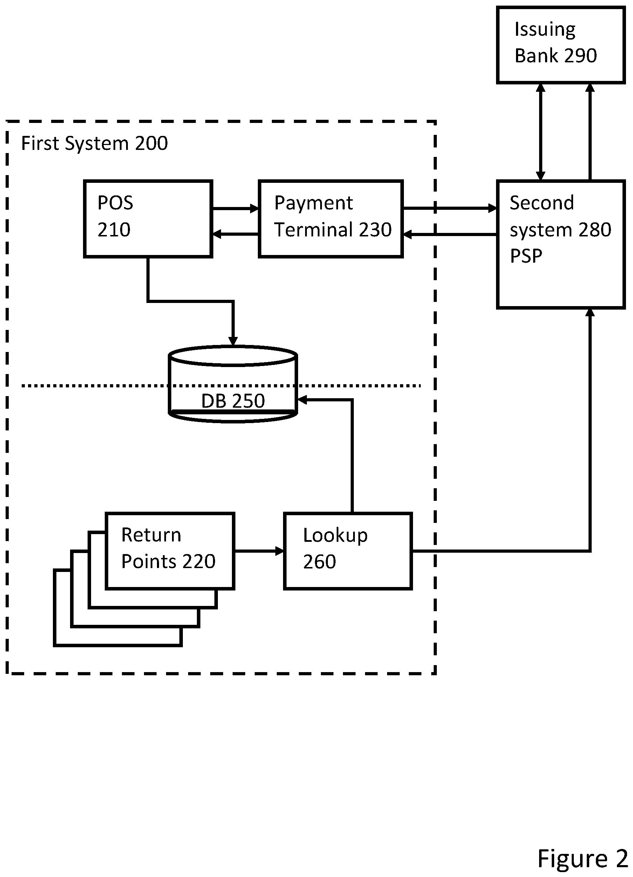

Embodiments of the method 100 will now be described further in relation to the diagram of Figure 2. In Figure 2, a first system 200 is generally shown in dashed lines in relation to a second system 280. The first system 200, may for example be a system for supporting returning of products and/or containers after use. The second system 280 is a system of a payment service provider (PSP). Figure 2 also generally illustrates a system of an issuing bank 290 which is involved in enabling debiting or crediting a payment card. Generally, everything above the dotted line within the first system 200 relates to the purchase of the product and everything below relates to the subsequent crediting or debiting of the payment card based on criterions on returning the product.

When a person purchases a product at a point of sale (POS) device 210 and the user uses a payment instrument which is associated with a payment card of the user, a payment terminal 230 connected to the point of sale device 210 is used to scan a payment instrument of the person. The scanning is performed by means of a scanning device included in the payment terminal. The payment terminal 230 then connects to the second system 280 relating to the payment service provider. Payment card data identifying the payment card of the user are identified in the scanning and these payment card data are sent from the payment terminal to the second system 280 of the payment service provider. In addition to the payment card data, also other data relating to the purchase are sent to the second system 280 of the payment service provider.

In the second system 280, the purchase may be handled according to a standard flow in respect to an issuing bank 290 of the payment card. Additionally, the payment card data are translated to a token which is unique to the payment card and the token is sent back to the payment terminal 230 of the first system 200. The token should be such that it is not possible to derive the payment card data without having access to an association between the token and the payment card data. For example, the token may be produced by means of applying a hash function to the credit card data. The token is also typically anonymous such that the cardholder cannot be identified from the token only. An association between the token and the payment card data is stored in the second system 280. The token may be created at receipt of the credit card data from the payment terminal 230 and the association between the token and the payment card data is then stored in memory (not shown) in the second system 280 and sent to the payment terminal 230. The association is any type of link between the token and the payment card data such that the payment card data can be retrieved from the memory based on the token and vice versa. In alternative the token may have been created and the association between the token and the credit card data may have been stored at an earlier stage in memory (not shown) in the second system 280. The token is then retrieved from memory by the association between the token and the payment card data when the payment card data are received in the second system 280 from the payment terminal 230 and the token sent from the second system 280 to the payment terminal 230.

After the token has been received in the payment terminal 230, it is forwarded to the point-of-sale device 210. The point-of-sale device 210 further includes another scanning device, such as the first electronic or optical scanning device described in relation to Figure 1, which is used to scan the product at the time of purchase of the product to identify an identifier of the product.

An association of the identifier to the token is then forwarded from the point-of-sale device 210 and stored in a database (DB) 250 in the first system. The association is any type of link between the token and the identifier such that the token can be retrieved from the database based on the identifier.

In first embodiments, a lookup device 260 monitors the first criterion a) receipt of an indication that the identifier of the product has been identified by means of scanning the product using another scanning device, such as the second electronic or optical scanning device described in relation to Figure 1, in connection with the container having been returned at one of one or more return points 220. If the first criterion is fulfilled, the lookup device 260 identifies the token by means of the association of the identifier to the token as stored in the database 250 in the first system 200, and the token is then sent to the second system 280 to enable debiting or crediting the payment card used for the purchase of the product.

In second embodiments, the lookup device 260 monitors for the identifier the second criterion b) no receipt within a predetermined time from the time of the purchase of an indication that the identifier of the product has been identified at any return point of the one or more return points 220. If the second criterion is fulfilled, the lookup device 260 identifies the token by means of the association of the identifier to the token as stored in the database 250 in the first system 200, and the token is then sent to the second system 280 to enable debiting or crediting the payment card used for the purchase of the product.

In third embodiments both the first criterion a) and the second criterion b) are monitored and on condition that at least one is fulfilled the initiator 260 identifies the token by means of the association of the identifier to the token as stored in the database 250 in the first system 200, and the token is then sent to the second system 280 to enable debiting or crediting the payment card used for the purchase of the product.

In different scenarios, the one or more return points may be located close to the location of the point of sale or at a substantial distance away. Similarly, if there are more than one return point, they may also be located at different distances from each other depending on the scenario. In a scenario relating to an event at a venue, all return points may be located at the venue but be distributed throughout the venue to allow for returning at different places or they may be located close to each other to enable ease of finding them and of further handling of the returned products.

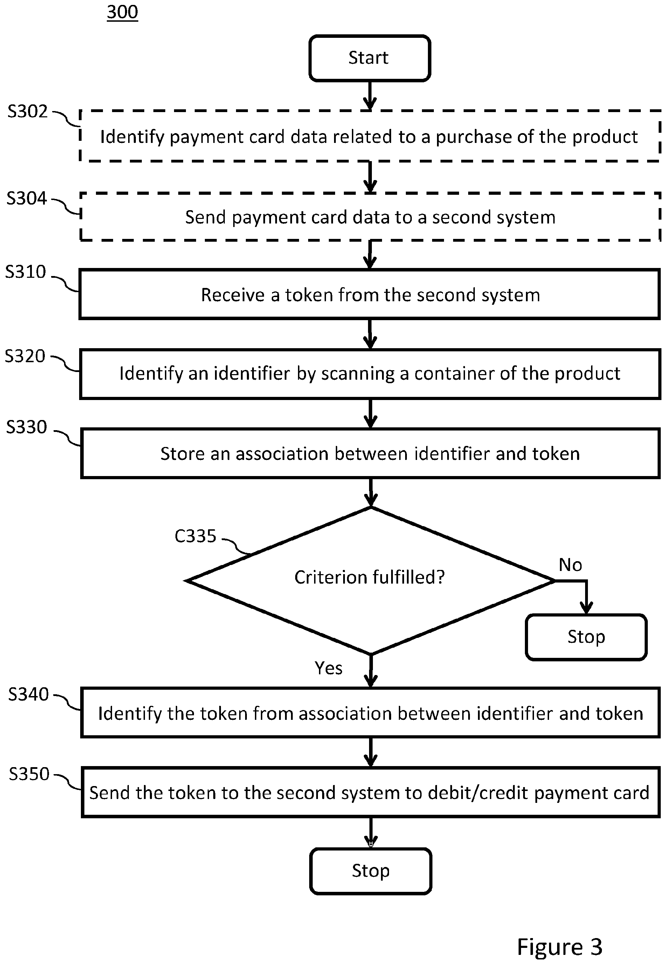

Embodiments relating to methods for supporting returning reusable containers will now be described in relation to Figure 3. For these embodiments, the first system is a system for handling containers. Furthermore, the product comprises a container and the identifier is of the container. Specifically, the product is typically food or beverage which is contained in the container. The container may for example be any type of crockery or packaging, e.g. for takeaway. The container is typically a glass, cup, mug, plate, bowl, box or the like. Additionally, container here is also intended to encompass other reusable items in relation to food and beverage, such as knife, fork, spoon, chopsticks, straw etc. The steps S302-S330 correspond to the steps S102-S130 as described in relation to Figure 1 and further described in relation to Figure 2 hereinabove.

In some of these embodiments, returning reusable containers is supported by enabling crediting a payment card used in connection with purchasing a product including the container when the container is returned at a return point. The crediting may then either be seen as refunding of a deposit included in the price of the product paid at the purchase of the product or as a reward for returning the container. The condition C335 is then that an indication that the identifier of the container has been identified by means of electronically or optically scanning the container using a second electronic or optical scanning device in connection with the container having been returned at a return point is received. When this condition C335 is fulfilled, the token is identified S340 by means of the association of the identifier to the token as stored and the token is then sent S350 to the second system to enable crediting the payment card used for the purchase of the product.

In other of these embodiments, returning reusable container is supported by enabling debiting a payment card used in connection with purchasing a product including the container when the container is not returned at any return point within a predetermined time from the time of the purchase of the product. The debiting may then be seen as payment of the cost of the container or as a fine for not returning the container within a stipulated time. The condition C335 is then that, within a predetermined time from a time of the purchase of the product, no indication is received indicating that the identifier of the container has been identified at any return point. When this condition C335 is fulfilled, the token is identified S340 by means of the association of the identifier to the token as stored and the token is then sent S350 to the second system to enable debiting the payment card used for the purchase of the product.

One scenario where these embodiments may be used is during an event, such as a concert. For example, beverage may be sold in a cup that can be filled again during the event and that can be returned at one or more returning points at the event location. Payment card data identifying a payment card used for the purchase of the cup and beverage the first time are identified S302 by means of scanning a payment instrument associated with the payment card is scanned. The payment card data are sent S304 to a second system of a payment service provider and a token associated with the payment card data are received S310 to the first system from the second system. Furthermore, the cup is scanned at the purchase including the cup and an identifier of the specific cup is identified S320. For example, the identifier may be identified via a barcode or QR code on the cup. An association of the identifier and the token is then stored S330.

If a deposit is charged at purchase, the condition may be used that the person buying the cup including the beverage returns the cup at a return point for the deposit to be refunded. Hence, on condition that the cup is scanned again and the identifier is identified at a return point and an indication is then provided in the first system that the identifier has been identified at the return point meaning that the cup has been returned at a return point, the token associated with the identifier is identified S340 by means of the association between the identifier and the token stored in the first system. The token is then sent S350 to the second system to enable crediting of the payment card, i.e. refund the deposit. Specifically, the payment card data are identified from the token by means of the association between the token and the payment card data stored in the second system.

If no deposit is charged at purchase, the condition may be used that the person buying the cup including the beverage returns the cup at a return point within a predetermined time, e.g. before the end of the event, to avoid a surcharge to be debited. Hence, on condition that the cup is not scanned again at any return point and the identifier is not identified at any return point within the predetermined time and that, hence, no indication is provided in the first system that the identifier has been identified at any return point within the predetermined time meaning that the cup has not been returned at a return point within the predetermined time, the token associated with the identifier is identified S340 by means of the association between the identifier and the token stored in the first system. The token is then sent S350 to the second system to enable debiting of the payment card. Specifically, the payment card data are identified from the token by means of the association between the token and the payment card data stored in the second system.

Reference is now made to Figure 1. In embodiments the first system is a system for handling time limited use of a product. The purchase is then of use of the product during a predetermined time from a time of the purchase. The condition C135 b) that no indication that the identifier of the product has been identified at any return point is received within the predetermined time from the time of the purchase may then be used. For example, the cost for using the product during the predetermined period of time may then be a fraction of the total cost of the product. If the condition b) is fulfilled, the remaining sum up to the total cost of the product can then be debited the payment card. For example, this would enable paying only a fraction of the cost of the product to try the product for the predetermined period of time. If you like the product, you may simply not return the product and the total cost will be charged once the predetermined period of time has expired. In some examples not even a fraction is needed but the cost for the use during the predetermined period of time is zero. You only need to present payment instrument which is scanned such that the payment card data can be identified, and a token received in the first system to be used if the product is not returned within the predetermined period of time.

In other embodiments, the first system is a system for handling use of a product a selectable time. The purchase is then of use of the product during a selectable time from a time of the purchase. The condition C135 a) that an indication that the identifier of the product has been identified by means of electronically or optically scanning the product using a second electronic or optical scanning device in connection with the container having been returned at a return point is received may then be used. The method 100 then further comprises determining a time of use of the product being a time from the time of the purchase to a time when the indication that the identifier of the product has been identified is received. The token is then identified S140 by means of the association from the identifier to the token stored in the first system. The token is then sent S150 to the second system to enable debiting the payment card used for the purchase and an amount being debited is based on the time of use of the product. For example, the amount being debited may be proportional to the time of use of the product up to a maximum amount, e.g. being the total cost for purchasing the product. For example, this may be used in relation to hiring a product, such as a scooter or other vehicle. It may also be used for hiring other type of products such as clothing. The invention provides a simple way of debiting a credit card after return of a product without the need for the person returning having to perform any additional action other than returning the product, such as having to present any payment instrument associated with a payment card.

Reference is now made to Figure 3. In embodiments, returning reusable containers is supported by enabling crediting a payment card used in connection with purchasing a product including the container an adaptive amount depending on the time from purchasing the product to returning the container at a return point. For these embodiments, the first system is a system for handling containers. Furthermore, the product comprises a container and the identifier is of the container. Specifically, the product is typically food or beverage which is contained in the container. The condition C335 a) that an indication that the identifier of the container has been identified by means of electronically or optically scanning the product using a second electronic or optical scanning device in connection with the container having been returned at a return point is received may then be used. The method 100 then further comprises determining a time before of the container is returned being a time from the time of the purchase to a time when the indication that the identifier of the product has been identified is received. The token is then identified S340 by means of the association from the identifier to the token stored in the first system. The token is then sent S350 to the second system to enable crediting the payment card used for the purchase and an amount being debited is based on the time before the container is returned. For example, the amount being debited may be inversely proportional to the time of use of the product starting from a maximum amount at a first desired time for returning the container down to a minimum amount at a second longer time for returning the container.

The method 100 may optionally include bypassing of the sending S350 of the token to the second system. Specifically, on condition that i) an indication that new payment card data identifying a new payment card is identified by means of electronically or optically scanning a payment instrument using a fourth electronic or optical scanning device at a return point before the product having been returned at a return point is received, and ii) an indication that the identifier of the product has been identified by means of electronically or optically scanning the product using a second electronic or optical scanning device in connection with the product container having been returned at a return point is received, the sending S350 of the token to the second system to enable debiting or crediting the payment card used for the purchase of the product may be bypassed and instead the new payment card data are sent to the second system to enable debiting or crediting the new payment card identified by the new payment card data. This may for example be used when someone else than the person purchasing a product finds the product, e.g. because the product has been left somewhere without being returned at a return point. This could typically happen for reusable container where someone else than the person who purchased the product including the reusable container collects the container and returns it at a return point. The person may then present a new credit card, i.e. a different credit card than the credit card used in purchasing the product including the container, or a payment instrument associated with the new credit card. The steps of sending S350 of the token and preferably also the identifying S340 of the token are then bypassed and the credit card data of the new credit card are sent to the second system to enable crediting the new payment card identified by the new payment card data.

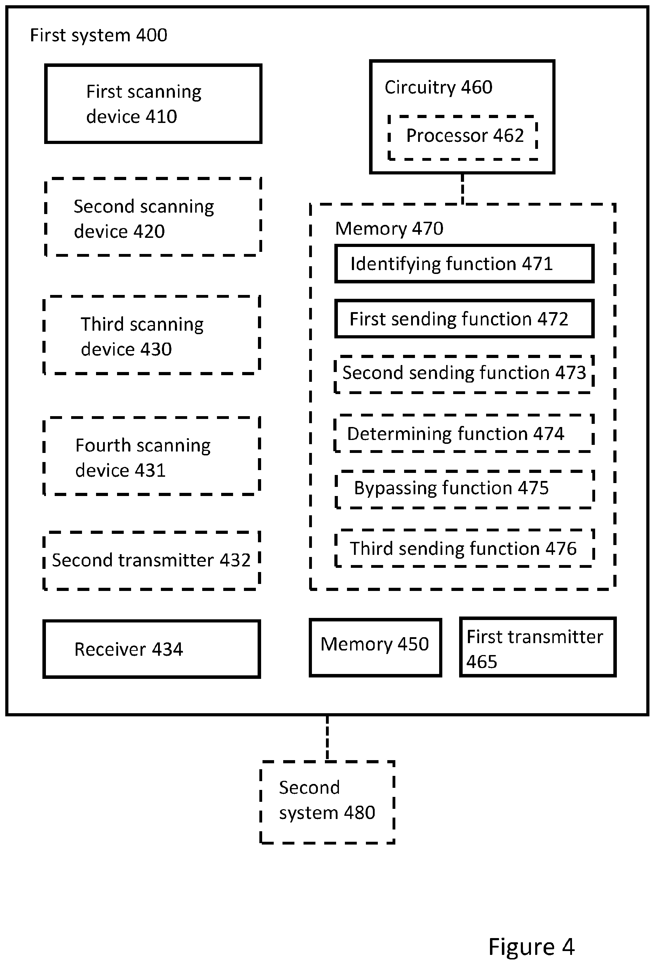

Figure 4 shows a block diagram in relation to embodiments of a first system 400 for supporting returning products and/or containers.

The first system 400 comprises a first scanning device 410, an optional second scanning device 420, an optional third scanning device 430, an optional fourth scanning device 431, a first transmitter 465, a receiver 434, a memory 450, a circuitry 460, and an optional second transmitter 432. The second scanning device 420 may be located in the first system 400 or it may be located outside the first system 400. The circuitry 460 is configured to carry out functions of the first system 400. The circuitry 460 may include a processor 462, such as for example a central processing unit (CPU), graphical processing unit (GPU), tensor processing unit (TPU), microcontroller, or microprocessor. The processor 462 is configured to execute program code. The program code may for example be configured to carry out the functions of the first system 400.

The first system 400 may further comprise a memory 470. The memory 470 may be one or more of a buffer, a flash memory, a hard drive, a removable media, a volatile memory, a non-volatile memory, a random access memory (RAM), or another suitable device. In a typical arrangement, the memory 470 may include a non-volatile memory for long term data storage and a volatile memory that functions as device memory for the circuitry 460. The memory 470 may exchange data with the circuitry 460 over a data bus. Accompanying control lines and an address bus between the memory 470 and the circuitry 460 also may be present.

Functions of the first system 400 may be embodied in the form of executable logic routines (e.g., lines of code, software programs, etc.) that are stored on a non-transitory computer readable medium (e.g., the memory 470) of the first system 400 and are executed by the circuitry 460 (e.g., using the processor 462). Furthermore, the functions of the first system 400 may be a stand-alone software application or form a part of a software application that carries out additional tasks related to the first system 400. The described functions may be considered a method that a processing unit, e.g. the processor 462 of the circuitry 460 is configured to carry out. Also, while the described functions may be implemented in software, such functionality may as well be carried out via dedicated hardware or firmware, or some combination of hardware, firmware and/or software.

The second transmitter 432 is configured to send payment card data to a second system 480 of a payment service provider.

The receiver 434 is configured to receive a token associated with the payment card data from a second system 480 relating to a payment service provider. The payment card data identify a payment card used for a purchase of a product, and are non-derivable from the token without access to an association of the token to the payment card data.

The first electronic or optical scanning device 410 is configured to electronically or optically scan the product to identify an identifier of the product in connection with the purchase of the product. The identifier is unique in the first system.

The second electronic or optical scanning device 420 is configured to electronically or optically scan the product to identify the identifier of the product in connection with the product having been returned at a return point.

The third electronic or optical scanning device 430 is configured to electronically or optically scan a payment instrument to identify the payment card data identifying the payment card associated with the payment instrument used for the purchase of the product.

The memory 450 is configured to store an association of the identifier to the token.

The first transmitter 465 is configured to send the token to the second system.

The circuitry 460 is configured to, on condition that a) an indication that the identifier of the product has been identified by means of electronically or optically scanning the product using the second electronic or optical scanning device in connection with the container having been returned at a return point is received or b) no indication that the identifier of the product has been identified at any return point is received within a predetermined time from the time of the purchase execute an identifying function 471 and a first sending function 472.

The identifying function 471 is configured to identify the token by means of the association of the identifier to the token as stored in the memory.

The first sending function 472 is configured to send the token via the first transmitter 465 to the second system 480 to enable debiting or crediting the payment card used for the purchase of the product.

The circuitry is further optionally configured to execute a second sending function 473, a determining function 474, a bypassing function 475, and a third sending function 476.

The second sending function 473 is configured to send the payment card data via the second transmitter to the second system.

The determining function 474 is configured to determine a time of use of the product being a time from the time of the purchase to a time when the indication that the identifier of the product has been identified is received.

The bypassing function 474 and the third sending function 475 are executed by the circuitry on condition that i) an indication that new payment card data identifying a new payment card is identified by means of electronically or optically scanning a payment instrument using the fourth electronic or optical scanning device at the return point before the product having been returned at a return point is received, and ii) an indication that the identifier of the product has been identified by means of electronically or optically scanning the product using a second electronic or optical scanning device in connection with the product container having been returned at a return point is received.

The bypassing function 474 is configured to bypass the first sending function.

The third sending function 475 configured to send the new payment card data via the second transmitter to the second system to enable debiting or crediting the new payment card identified by the new payment card data.

For further details and options for the functions and features of the first system 400 reference is made to the details and options for the corresponding acts of the method 100 and structural features described in relation to Figure 1 and Figure 2 and to the details and options for the corresponding acts of the method 300 and structural features described in relation to Figure 3.

Even if the first system 200, 400 has been described as one system in relation to Figure 2 and Figure 4, it should be noted that it does not have to belong to a single entity. For example, the point of sale device 210 including the first scanning device 410 and the payment terminal 230 comprising the third scanning device 430, the second transmitter 432, and the receiver 434 belong to a first entity handling the purchase of the product, such as a merchant. The database 250 comprising the memory 450, the lookup device 260 comprising the circuitry 460 and the first transmitter 465, and the one or more return points 220 including the second scanning device 420 may belong to a different entity handling the return of the products and initiating crediting or debiting of payment cards based on criterions on returning the products.

The invention has been described with reference to some detailed examples, however the skilled person realizes that a number of modifications of the embodiments described herein are possible without departing from the scope of the invention, which is defined in the appended claims.

### Itemised list

Item 1. A method in a first system, comprising the steps of:
receiving a token associated with payment card data from a second system relating to a payment service provider, wherein the payment card data identify a payment card used for a purchase of a product, wherein the payment card data are non-derivable from the token without access to an association of the token to the payment card data;
identifying, by means of electronically or optically scanning the product using a first electronic or optical scanning device, an identifier of the product in connection with the purchase of the product, wherein the identifier is unique in the first system;
storing an association of the identifier to the token; and
on condition that a) an indication that the identifier of the product has been identified by means of electronically or optically scanning the product using a second electronic or optical scanning device in connection with the product having been returned at a return point is received or b) no indication that the identifier of the product has been identified at any return point is received within a predetermined time from the time of the purchase:
   identifying the token by means of the association of the identifier to the token as stored; and
   sending the token to the second system to enable debiting or crediting the payment card used for the purchase of the product.

Item 2. The method according to item 1, wherein the first system is a system for handling containers, wherein the product comprises a container and the identifier is of the container, wherein the condition is that an indication that the identifier of the container has been identified by means of electronically or optically scanning the container using a second electronic or optical reader device in connection with the container having been returned at a return point is received, and wherein the token is sent to the second system to enable crediting the payment card used for the purchase of the product.

Item 3. The method according to item 1, wherein the first system is a system for handling containers, wherein the product comprises a container and the identifier is of the container, wherein the condition is that no indication that the identifier of the container has been identified at any return point is received within a predetermined time from a time of the purchase of the product, and wherein the token is sent to the second system to enable debiting the payment card used for the purchase of the product.

Item 4. The method according to item 1, wherein the first system is a system for handling time limited use of a product, wherein the purchase is of use of the product during a predetermined time from a time of the purchase, wherein the condition is that no indication that the identifier of the product has been identified at any return point is received within the predetermined time from the time of the purchase, and wherein the token is sent to the second system to enable debiting the payment card used for the purchase.

Item 5. The method according to item 1, wherein the first system is a system for handling use of a product a selectable time, wherein the purchase is of use of the product during a selected time from a time of the purchase, wherein the condition is that an indication that the identifier of the product has been identified by means of electronically or optically scanning the product using a second electronic or optical scanning device in connection with the product having been returned at a return point is received, further comprising:
determining a time of use of the product being a time from the time of the purchase to a time when the indication that the identifier of the product has been identified is received, wherein the token is sent to the second system to enable debiting the payment card used for the purchase and an amount being debited is based on the time of use of the product.

Item 6. The method according to any one of the previous items, further comprising:
identifying, by means of electronically or optically scanning a payment instrument using a third electronic or optical scanning device, the payment card data identifying the payment card associated with the payment instrument used for a purchase of a product;
sending the payment card data to the second system.

Item 7. The method according to any one of the previous items, further comprising:
on condition that i) an indication that new payment card data identifying a new payment card is identified by means of electronically or optically scanning a payment instrument using a fourth electronic or optical scanning device at a return point before the product having been returned at a return point is received, and ii) an indication that the identifier of the product has been identified by means of electronically or optically scanning the product using a second electronic or optical scanning device in connection with the product container having been returned at a return point is received:
bypassing the sending of the token to the second system to enable debiting or crediting the payment card used for the purchase of the product; and
sending the new payment card data to the second system to enable debiting or crediting the new payment card identified by the new payment card data.

Item 8. A first system, comprising:
a receiver configured to receive a token associated with the payment card data from a second system relating to a payment service provider, wherein the payment card data identify a payment card used for a purchase of a product, wherein the payment card data are non-derivable from the token without access to an association of the token to the payment card data;
a first electronic or optical scanning device configured to, in connection with the purchase of the product, electronically or optically scan the product to identify an identifier of the product, wherein the identifier is unique in the first system;
a memory configured to store an association of the identifier to the token;
a first transmitter configured to send the token to the second system; and
circuitry configured to, on condition that a) an indication that the identifier of the product has been identified by means of electronically or optically scanning the product using a second electronic or optical scanning device in connection with the product having been returned at a return point is received or b) no indication that the identifier of the product has been identified at any return point is received within a predetermined time from the time of the purchase execute:
   an identifying function configured to identify the token by means of the association of the identifier to the token as stored in the memory; and
   a first sending function configured to send the token via the first transmitter to the second system to enable debiting or crediting the payment card used for the purchase of the product.

Item 9. The first system according to item 8, wherein the first system is a system for handling containers, wherein the product comprises a container and the identifier is of the container, and wherein the first system further comprises: a second electronic or optical scanning device configured to electronically or optically scan the container to identify the identifier of the container in connection with the container having been returned at a return point,
wherein the condition is that an indication that the identifier of the container has been identified by means of electronically or optically scanning the container using the second electronic or optical scanning device is received, and wherein the first sending function is configured to send the token via the transmitter to the second system to enable crediting the payment card used for the purchase of the product.

Item 10. The first system according to item 8, wherein the first system is a system for handling containers, wherein the product comprises a container and the identifier is of the container, and wherein the first system further comprises: a second electronic or optical scanning device configured to electronically or optically scan the container to identify the identifier of the container in connection with the container having been returned at a return point,
wherein the condition is that no indication that the identifier of the container has been identified at any return point is received within a predetermined time from a time of the purchase of the product, and wherein first sending function is configured to send the token via the transmitter to the second system to enable debiting the payment card used for the purchase of the product.

Item 11. The first system according to item 8, wherein the first system is a system for handling time limited use of a product, wherein the purchase is of use of the product during a predetermined time from a time of the purchase, and wherein the first system further comprises:
a second electronic or optical scanning device configured to electronically or optically scan the container to identify the identifier of the container in connection with the container having been returned at a return point,
wherein the condition is that no indication that the identifier of the product has been identified at any return point is received within the predetermined time from the time of the purchase, and wherein the first sending function is configured to send the token to via the transmitter to the second system to enable debiting the payment card used for the purchase.

Item 12. The first system according to item 8, wherein the first system is a system for handling use of a product a selectable time, wherein the purchase is of use of the product during a selected time from a time of the purchase, wherein the system further comprises:
a second electronic or optical scanning device configured to electronically or optically scan the product to identify the identifier of the product in connection with the product having been returned at a return point,
wherein the condition is that an indication that the identifier of the product has been identified by means of electronically or optically scanning the product using the second electronic or optical scanning device is received,
wherein the circuitry is further configured to execute:
   a determining function configured to determine a time of use of the product being a time from the time of the purchase to a time when the indication that the identifier of the product has been identified is received, and wherein the first sending function is configured to send the token to via the transmitter to the second system to enable debiting the payment card associated with the payment instrument used for the purchase and an amount being debited is based on the time of use of the product.

Item 13. The first system according to any one of items 8-12, further comprising:
a second transmitter configured to send the payment card data to a second system of a payment service provider;
a third electronic or optical scanning device configured to electronically or optically scan a payment instrument to identify the payment card data identifying the payment card associated with the payment instrument used for the purchase of the product,
wherein the circuitry is further configured to execute:
   a second sending function configured to send the payment card data via the second transmitter to the second system to enable debiting or crediting the payment card used for the purchase of the product.

Item 14. The method according to any one of the previous items, further comprising:
a second transmitter configured to send the payment card data to a second system of a payment service provider;
a fourth electronic or optical scanning device configured to electronically or optically scan a payment instrument to identify the payment card data identifying a payment card at a return point,
wherein the circuitry is further configured to, on condition that i) an indication that new payment card data identifying a new payment card is identified by means of electronically or optically scanning a payment instrument using the fourth electronic or optical scanning device at the return point before the product having been returned at a return point is received, and ii) an indication that the identifier of the product has been identified by means of electronically or optically scanning the product using a second electronic or optical scanning device in connection with the product container having been returned at a return point is received, execute:
   a bypassing function configured to bypass the first sending function;
   a third sending function configured to send the new payment card data via the second transmitter to the second system to enable debiting or crediting the new payment card identified by the new payment card data.

Item 15. A method in a system for handling containers, comprising the steps of:
receiving a token associated with payment card data from a system relating to a payment service provider, wherein the payment card data identify a payment card used for a purchase of a product, wherein the payment card data are non-derivable from the token without access to an association of the token to the payment card data;
identifying, by means of electronically or optically scanning a container of the product using a first electronic or optical scanning device, an identifier of the container in connection with the purchase of the product, wherein the identifier is unique in the system for handling containers;
storing an association of the identifier to the token; and
on condition that an indication that the identifier of the container has been identified by means of electronically or optically scanning the container using a second electronic or optical scanning device in connection with the container having been returned at a return point is received:
   identifying the token by means of the association of the identifier to the token as stored; and
   sending the token to the system of the payment service provider to enable crediting the payment card used for the purchase of the product.

Item 16. A method in a system for handling containers, comprising the steps of:
receiving a token associated with payment card data from a system of a payment service provider, wherein the payment card data identify a payment card used for a purchase of a product, wherein the payment card data are non-derivable from the token without access to an association of the token to the payment card data;
identifying, by means of electronically or optically scanning a container of the product using a first electronic or optical scanning device, an identifier of the container in connection with the purchase of the product, wherein the identifier is unique in the system for handling containers;
storing an association of the identifier to the token; and
on condition that no indication that the identifier of the container has been identified at any return point is received within a predetermined time from a time of the purchase of the product:
   identifying the token by means of the association of the identifier to the token as stored; and
   sending the token to the system of the payment service provider to enable debiting the payment card used for the purchase of the product.

Item 17. The method according to any one of items 15 and 16, further comprising:
identifying, by means of electronically or optically scanning a payment instrument using a third electronic or optical scanning device, the payment card data identifying the payment card associated with the payment instrument used for a purchase of a product;
sending the payment card data to the second system.

## Claims

1. A method in a first system, comprising the steps of:
receiving a token associated with payment card data from a second system relating to a payment service provider, wherein the payment card data identify a payment card used for a purchase of a product, wherein the payment card data are non-derivable from the token without access to an association of the token to the payment card data;
identifying, by means of electronically or optically scanning the product using a first electronic or optical scanning device, an identifier of the product in connection with the purchase of the product, wherein the identifier is unique in the first system;
storing an association of the identifier to the token; and
on condition that a) an indication that the identifier of the product has been identified by means of electronically or optically scanning the product using a second electronic or optical scanning device in connection with the product having been returned at a return point is received or b) no indication that the identifier of the product has been identified at any return point is received within a predetermined time from the time of the purchase:
identifying the token by means of the association of the identifier to the token as stored; and
sending the token to the second system to enable debiting or crediting the payment card used for the purchase of the product.

2. The method according to claim 1, wherein the first system is a system for handling containers, wherein the product comprises a container and the identifier is of the container, wherein the condition is that an indication that the identifier of the container has been identified by means of electronically or optically scanning the container using a second electronic or optical reader device in connection with the container having been returned at a return point is received, and wherein the token is sent to the second system to enable crediting the payment card used for the purchase of the product.

3. The method according to claim 1, wherein the first system is a system for handling containers, wherein the product comprises a container and the identifier is of the container, wherein the condition is that no indication that the identifier of the container has been identified at any return point is received within a predetermined time from a time of the purchase of the product, and wherein the token is sent to the second system to enable debiting the payment card used for the purchase of the product.

4. The method according to claim 1, wherein the first system is a system for handling time limited use of a product, wherein the purchase is of use of the product during a predetermined time from a time of the purchase, wherein the condition is that no indication that the identifier of the product has been identified at any return point is received within the predetermined time from the time of the purchase, and wherein the token is sent to the second system to enable debiting the payment card used for the purchase.

5. The method according to claim 1, wherein the first system is a system for handling use of a product a selectable time, wherein the purchase is of use of the product during a selected time from a time of the purchase, wherein the condition is that an indication that the identifier of the product has been identified by means of electronically or optically scanning the product using a second electronic or optical scanning device in connection with the product having been returned at a return point is received, further comprising:
determining a time of use of the product being a time from the time of the purchase to a time when the indication that the identifier of the product has been identified is received, wherein the token is sent to the second system to enable debiting the payment card used for the purchase and an amount being debited is based on the time of use of the product.

6. The method according to any one of the previous claims, further comprising:
identifying, by means of electronically or optically scanning a payment instrument using a third electronic or optical scanning device, the payment card data identifying the payment card associated with the payment instrument used for a purchase of a product;
sending the payment card data to the second system.

7. The method according to any one of the previous claims, further comprising:
on condition that i) an indication that new payment card data identifying a new payment card is identified by means of electronically or optically scanning a payment instrument using a fourth electronic or optical scanning device at a return point before the product having been returned at a return point is received, and ii) an indication that the identifier of the product has been identified by means of electronically or optically scanning the product using a second electronic or optical scanning device in connection with the product container having been returned at a return point is received:
bypassing the sending of the token to the second system to enable debiting or crediting the payment card used for the purchase of the product; and
sending the new payment card data to the second system to enable debiting or crediting the new payment card identified by the new payment card data.

8. A first system, comprising:
a receiver configured to receive a token associated with the payment card data from a second system relating to a payment service provider, wherein the payment card data identify a payment card used for a purchase of a product, wherein the payment card data are non-derivable from the token without access to an association of the token to the payment card data;
a first electronic or optical scanning device configured to, in connection with the purchase of the product, electronically or optically scan the product to identify an identifier of the product, wherein the identifier is unique in the first system;
a memory configured to store an association of the identifier to the token;
a first transmitter configured to send the token to the second system; and
circuitry configured to, on condition that a) an indication that the identifier of the product has been identified by means of electronically or optically scanning the product using a second electronic or optical scanning device in connection with the product having been returned at a return point is received or b) no indication that the identifier of the product has been identified at any return point is received within a predetermined time from the time of the purchase execute:
an identifying function configured to identify the token by means of the association of the identifier to the token as stored in the memory; and
a first sending function configured to send the token via the first transmitter to the second system to enable debiting or crediting the payment card used for the purchase of the product.

9. The first system according to claim 8, wherein the first system is a system for handling containers, wherein the product comprises a container and the identifier is of the container, and wherein the first system further comprises:
a second electronic or optical scanning device configured to electronically or optically scan the container to identify the identifier of the container in connection with the container having been returned at a return point,
wherein the condition is that an indication that the identifier of the container has been identified by means of electronically or optically scanning the container using the second electronic or optical scanning device is received, and wherein the first sending function is configured to send the token via the transmitter to the second system to enable crediting the payment card used for the purchase of the product.

10. The first system according to claim 8, wherein the first system is a system for handling containers, wherein the product comprises a container and the identifier is of the container, and wherein the first system further comprises:
a second electronic or optical scanning device configured to electronically or optically scan the container to identify the identifier of the container in connection with the container having been returned at a return point,
wherein the condition is that no indication that the identifier of the container has been identified at any return point is received within a predetermined time from a time of the purchase of the product, and wherein first sending function is configured to send the token via the transmitter to the second system to enable debiting the payment card used for the purchase of the product.

11. The first system according to claim 8, wherein the first system is a system for handling time limited use of a product, wherein the purchase is of use of the product during a predetermined time from a time of the purchase, and wherein the first system further comprises:
a second electronic or optical scanning device configured to electronically or optically scan the container to identify the identifier of the container in connection with the container having been returned at a return point,
wherein the condition is that no indication that the identifier of the product has been identified at any return point is received within the predetermined time from the time of the purchase, and wherein the first sending function is configured to send the token to via the transmitter to the second system to enable debiting the payment card used for the purchase.

12. The first system according to claim 9, wherein the first system is a system for handling use of a product a selectable time, wherein the purchase is of use of the product during a selected time from a time of the purchase, wherein the system further comprises:
a second electronic or optical scanning device configured to electronically or optically scan the product to identify the identifier of the product in connection with the product having been returned at a return point,
wherein the condition is that an indication that the identifier of the product has been identified by means of electronically or optically scanning the product using the second electronic or optical scanning device is received,
wherein the circuitry is further configured to execute:
a determining function configured to determine a time of use of the product being a time from the time of the purchase to a time when the indication that the identifier of the product has been identified is received, and wherein the first sending function is configured to send the token to via the transmitter to the second system to enable debiting the payment card associated with the payment instrument used for the purchase and an amount being debited is based on the time of use of the product.

13. The first system according to any one of claims 8-12, further comprising:
a second transmitter configured to send the payment card data to a second system of a payment service provider;
a third electronic or optical scanning device configured to electronically or optically scan a payment instrument to identify the payment card data identifying the payment card associated with the payment instrument used for the purchase of the product,
wherein the circuitry is further configured to execute:
a second sending function configured to send the payment card data via the second transmitter to the second system to enable debiting or crediting the payment card used for the purchase of the product.

14. The method according to any one of the previous claims, further comprising:
a second transmitter configured to send the payment card data to a second system of a payment service provider;
a fourth electronic or optical scanning device configured to electronically or optically scan a payment instrument to identify the payment card data identifying a payment card at a return point,
wherein the circuitry is further configured to, on condition that i) an indication that new payment card data identifying a new payment card is identified by means of electronically or optically scanning a payment instrument using the fourth electronic or optical scanning device at the return point before the product having been returned at a return point is received, and ii) an indication that the identifier of the product has been identified by means of electronically or optically scanning the product using a second electronic or optical scanning device in connection with the product container having been returned at a return point is received, execute:
a bypassing function configured to bypass the first sending function;
a third sending function configured to send the new payment card data via the second transmitter to the second system to enable debiting or crediting the new payment card identified by the new payment card data.
